# EUROPÄISCHE PATENTSCHRIFT

(11) **EP 1 491 379 B1**
(45) Veröffentlichungstag und Bekanntmachung des Hinweises auf die Patenterteilung: **30.07.2008**
(21) Anmeldenummer: 04102353.2
(22) Anmeldetag: 27.05.2004
(51) Int. Cl.: B60K 15/01

(54) **Einrichtung zur Befüllung und Entlüftung eines Zusatzbehälters**
Filling and venting device for a supplementary tank
Dispositif pour remplir et aérer un réservoir supplementaire

(30) Priorität: 27.06.2003 DE 10329149
(43) Veröffentlichungstag der Anmeldung: 29.12.2004
(73) Patentinhaber: Continental Automotive GmbH, 30165 Hannover (DE)
(72) Erfinder: Dasbach, Burkhard, 60389 Frankfurt/Main (DE); Grgec-Messner, Ivan, 65779 Kelkheim (DE); Tietz, Ulrich, 65830 Kriftel (DE)

(56) Entgegenhaltungen:
- US-A- 3 187 936
- US-A- 4 274 549

## Beschreibung

Die Erfindung betrifft eine Einrichtung zur Befüllung und Entlüftung eines eine durch einen Kraftstoffbehälter hindurchgeführte Befüllleitung aufweisenden Zusatzbehälters mit einer Befüllleitung und mit einer Entlüftungsleitung.

Zusatzbehälter für Kraftstoffbehälter werden insbesondere bei künftigen Kraftfahrzeugen mit Diesel-Brennkraftmaschine zur Speicherung eines Additivs benötigt. Die Befüllleitung und die Entlüftungsleitung des Zusatzbehälters sind dabei durch den Kraftstoffbehälter hindurchgeführt.

Aus der US 4,274,549 ist eine Tankeinfüllstutzen-Einheit aus zwei koaxialen Rohren bekannt, wobei Kraftstoff über ein Rohr eingefüllt wird und Kraftstoffdampf über das andere Rohr in entgegengesetzte Richtung strömt.

Der Erfindung liegt das Problem zugrunde, eine Einrichtung der eingangs genannten Art so zu gestalten, dass sie einen einfachen Anschluss des Zusatzbehälters an eine Entlüftungs- oder Befülleinrichtung ermöglicht.

Dieses Problem wird erfindungsgemäß dadurch gelöst, dass die Befüllleitung und die Entlüftungsleitung als bauliche Einheit gestaltet sind, und auf einem Flansch des Kraftstoffbehälters ein mit der Befüllleitung verbundenes Anschlussstück verschiebbar gehalten ist.

Durch diese Gestaltung erfordert der Zusatzbehälter für seine Entlüftung und für seine Befüllbarkeit nur die Verlegung einer einzigen Leitung. Der Anschluss des Zusatzbehälters gestaltet sich daher besonders einfach. Weiterhin lässt sich die bauliche Einheit aus Befüllleitung und Entlüftungsleitung mit einer hohen Eigenstabilität gestalten und zuverlässig in dem Kraftstoffbehälter befestigen. Vorzugsweise sind die Nachfüllleitung und die Entlüftungsleitung zu einem gemeinsamen Flansch des Kraftstoffbehälters geführt, da ein Flansch zur Montage des Zusatzbehälters oder einer Kraftstoff-Fördereinheit meist ohnehin an dem Kraftstoffbehälter angeordnet ist. Der Anschluss der Befüllleitung ist beim Befüllen des Zusatzbehälters leicht zugänglich und ansonsten besonders platzsparend angeordnet. Hierdurch gestaltet sich das Nachfüllen des Zusatzbehälters besonders komfortabel.

Als Befüllleitung und Entlüftungsleitung lassen sich gemäß einer vorteilhaften Weiterbildung der Erfindung besonders kostengünstige Leitungen einsetzen, wenn die Befüllleitung und die Entlüftungsleitung einander konzentrisch umschließen.

Die Anordnung einer Entlüftungsöffnung im oberen Bereich des Zusatzbehälters gestaltet sich gemäß einer anderen vorteilhaften Weiterbildung der Erfindung konstruktiv besonders einfach, wenn die Befüllleitung innerhalb der Entlüftungsleitung angeordnet ist.

Ein Eindringen von Schmutz in den Zusatzbehälter über die Entlüftungsleitung lässt sich gemäß einer anderen vorteilhaften Weiterbildung der Erfindung einfach vermeiden, wenn auf dem freien Ende des Anschlussstücks ein einen Entlüftungskanal aufweisender Stopfen befestigt ist und wenn der Entlüftungskanal mit der Entlüftungsleitung verbunden ist.

Die Anschlüsse der Entlüftungsleitung und der Befüllleitung an dem Flansch gestalten sich gemäß einer anderen vorteilhaften Weiterbildung der Erfindung besonders kompakt, wenn die Verbindung der Entlüftungsleitung mit dem Entlüftungskanal das Anschlussstück und den sich an das Anschlussstück anschließenden Bereich der Befüllleitung konzentrisch umschließt.

Die Montage des Stopfens gestaltet sich gemäß einer anderen vorteilhaften Weiterbildung der Erfindung besonders einfach, wenn der Stopfen formschlüssig mit dem Flansch verbunden ist.

Die Verschiebbarkeit des Anschlussstücks erfordert gemäß einer anderen vorteilhaften Weiterbildung der Erfindung einen besonders geringen konstruktiven Aufwand, wenn das Anschlussstück hervorstehende, in einem rohrförmigen Stutzen des Flansches geführte Ränder hat.

Die den Entlüftungskanal mit der Entlüftungsleitung verbindende Zuleitung erfordert gemäß einer anderen vorteilhaften Weiterbildung der Erfindung einen besonders geringen baulichen Aufwand, wenn die Ränder als um das Anschlussstück umlaufende Bunde mit axialen Ausnehmungen ausgebildet sind.

Die Befüllleitung lässt sich gemäß einer anderen vorteilhaften Weiterbildung der Erfindung einfach verschließen, wenn der Stopfen ein Dichtelement zum Verschließen des Anschlussstücks in einer in den Stutzen eingeschobenen Stellung hat.

Das Anschlussstück wird gemäß einer anderen vorteilhaften Weiterbildung der Erfindung zuverlässig in seinem vorgesehenen Bereich gehalten, wenn der Stutzen zur Begrenzung der Verschiebbarkeit des Anschlussstücks vorgesehene, sich an den Rändern abstützende Anschläge hat.

Beim Herausziehen des Anschlussstücks wird die von der Entlüftungsleitung konzentrisch umschlossene Befüllleitung in den Stutzen hineingezogen. Ein Knicken der Nachfüllleitung beim Einschieben des Anschlussstücks in den Stutzen lässt sich gemäß einer anderen vorteilhaften Weiterbildung der Erfindung einfach vermeiden, wenn zumindest einer der Anschläge parallel zum Anschlussstück angeordnete Stege hat.

Die Montage und die Begrenzung der Verschiebbarkeit des Anschlussstücks gestaltet sich gemäß einer anderen vorteilhaften Weiterbildung der Erfindung besonders einfach, wenn der an der Außenseite des Kraftstoffbehälters anzuordnende Anschlag Rasthaken aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: schematisch einen Kraftstoffbehälter mit einem darin angeordneten Zusatzbehälter und einer erfindungsgemäßen Einrichtung,
- Figur 2: eine Schnittdarstellung durch einen Flansch des Kraftstoffbehälters,
- Figur 3: den Flansch aus Figur 2 mit einem Anschlussstück in Befüllstellung.
- Figur 4: das Anschlussstück nach Figur 3 mit einer Anschlaghülse

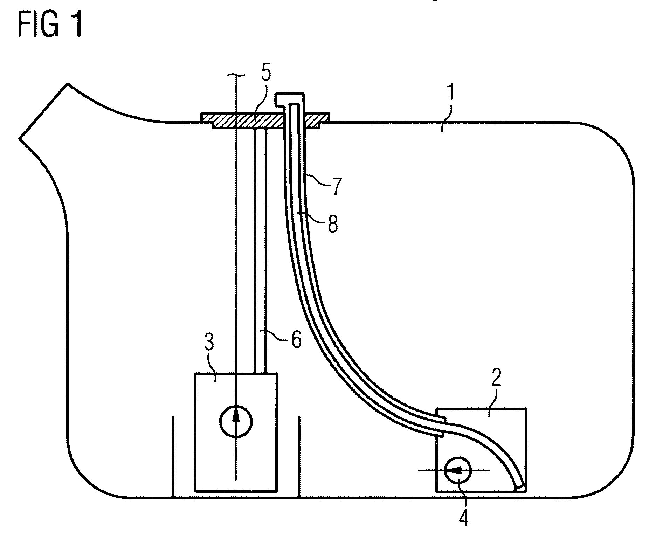

Figur 1 zeigt einen Kraftstoffbehälter 1 eines Kraftfahrzeuges mit einem darin angeordneten Zusatzbehälter 2 und mit einer Fördereinheit 3 für Kraftstoff. Die Fördereinheit 3 fördert Kraftstoff zu einer nicht dargestellten Bennkraftmaschine des Kraftfahrzeuges. Der Zusatzbehälter 2 dient beispielsweise zur Aufnahme eines dem Kraftstoff in einem vorgesehenen Verhältnis beizumischenden Additivs. Ein solches Additiv vermag die Verbrennungstemperatur von bei der Verbrennung von

Diesel-Kraftstoff entstehenden Partikeln zu senken und damit den Einsatz eines durch Abbrand der Partikel zu reinigenden Partikelfilters zu ermöglichen. In dem Zusatzbehälter 2 ist eine Dosierpumpe 4 zur Förderung des Additivs in den Kraftstoffbehälter 1 angeordnet.

Der Kraftstoffbehälter 1 hat in seinem oberen Bereich einen Flansch 5 zur Montage des Zusatzbehälters 2 und der Fördereinheit 3. Die Fördereinheit 3 wird mittels eines an dem Flansch 5 angeordneten Stützarms 6 in ihrer vorgesehenen Lage gehalten. Der Zusatzbehälter 2 ist über eine Entlüftungsleitung 7 und über eine Befüllleitung 8 mit dem Flansch 5 verbunden. Die Entlüftungsleitung 7 umschließt die Befüllleitung 8 und ist bis in den oberen Bereich des Zusatzbehälters 2 geführt. Das freie Ende der Befüllleitung 8 ist im Bodenbereich des Zusatzbehälters 2 angeordnet.

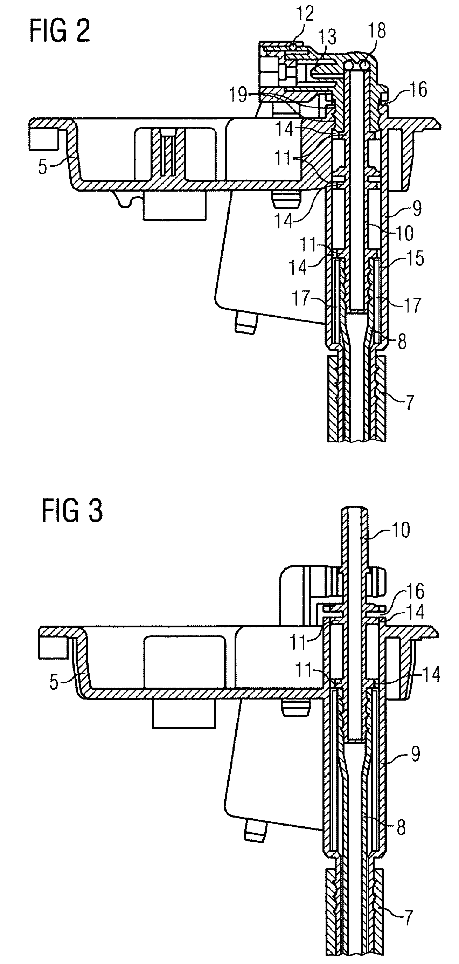

Figur 2 zeigt in einer Schnittdarstellung durch den Flansch 5 aus Figur 1, dass die Befüllleitung 8 an einem in einem Stutzen 9 des Flansches 5 verschiebbaren Anschlussstück 10 angeschlossen ist. Das freie Ende des Stutzens 9 hat einen Anschluss für die Entlüftungsleitung 7. Das Anschlussstück 10 weist an seiner Außenseite mehrere hervorstehende Ränder 11 auf. Ein Teil der Ränder 11 stützt sich an der inneren Wandung des Stutzens 9 ab. Auf dem der Entlüftungsleitung 7 abgewandten Ende des Stutzens 9 ist ein Stopfen 12 mit einem Entlüftungskanal 13 angeordnet. Der Entlüftungskanal 13 ist über Ausnehmungen 14 in den Rändern 11 des Anschlussstücks 10 mit der Entlüftungsleitung 7 verbunden. Damit kann bei einem Verbrauch des Additivs Luft in den in Figur 1 dargestellten Zusatzbehälter 2 nachströmen. Der Stutzen 9 hat zwei Anschläge 15, 16 zur Begrenzung der Verschiebbarkeit des Anschlussstücks 10. Der obere Anschlag 16 ist als Rasthaken gestaltet. Es ist aber auch denkbar, als oberen Anschlag 16 eine in eine Nut des Stutzens 9 eingreifbare Ω-förmige Feder vorzusehen.

Der untere Anschlag 15 weist axial zum Stutzen 9 angeordnete Stege 17 auf. Der der Befüllleitung 8 am Nächsten angeordnete Rand 11 des Anschlussstücks 10 stützt sich in der eingezeichneten Stellung an dem unteren Anschlag 15 ab. Weiterhin zeigt Figur 2, dass der Stopfen 12 gegenüber der Stirnseite des Anschlussstücks 10 und gegenüber der inneren Wandung des Stutzens 9 mittels als O-Ringe ausgebildeter Dichtelemente 18, 19 abgedichtet ist.

Zum Befüllen des in Figur 1 dargestellten Zusatzbehälters 2 gemäß Figur 3 wird der Stopfen 12 von dem Stutzen 9 abgezogen und gleichzeitig das Anschlussstück 10 aus dem Stutzen 9 herausgezogen, bis der der Befüllleitung 8 am entferntesten angeordnete Rand 11 des Anschlussstücks 10 gegen den oberen Anschlag 16 gelangt. Diese Stellung ist in Figur 3 dargestellt. In dieser Stellung ist das freie Ende des Anschlussstücks 10 frei zugänglich und lässt sich zum Nachfüllen des Zusatzbehälters 2, beispielsweise mit einem Schlauch verbinden. Die von dem nachgefüllten Additiv aus dem Zusatzbehälter 2 verdrängte Luft kann außen an der Befüllleitung 8 und dem Anschlussstück 10 durch die Ausnehmungen 14 in den Rändern 11 entweichen.

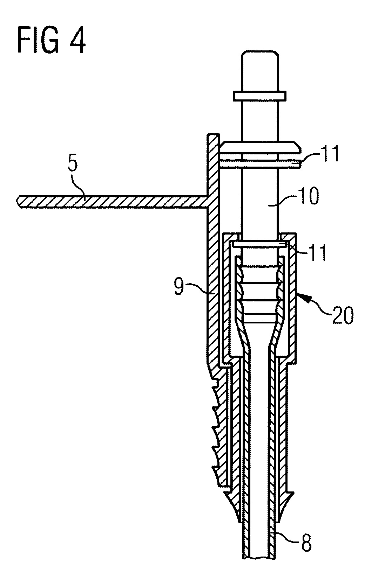

Figur 4 zeigt eine weitere Ausführungsform des Anschlussstücks 10 aus Figur 3. Anstelle der Stege umgibt eine Anschlaghülse 20 das Anschlussstück 10. Die Anschlaghülse 20 besitzt an ihrem oberen Ende einen nach innen gerichteten Kragen 21, der den Rand 11 umgreift. An ihrem unteren Ende weist die Anschlaghülse 20 nach außen gerichtete Rasthaken 22 auf, die sich am unteren Ende des Stutzens 9 abstützen. In dieser Stellung begrenzt die Anschlaghülse 20 die Bewegung des Anschlussstücks 10 nach außen.

## Patentansprüche

1. Einrichtung zur Befüllung und Entlüftung eines eine durch einen Kraftstoffbehälter hindurchgeführte Befüllleitung aufweisenden Zusatzbehälters mit einer Befüllleitung und mit einer Entlüftungsleitung, wobei die Befüllleitung (8) und die Entlüftungsleitung (7) als bauliche Einheit gestaltet sind und auf einem Flansch (5) des Kraftstoffbehälters (1) ein mit der Befüllleitung (8) verbundenes Anschlussstück (10) verschiebbar gehalten ist.

2. Einrichtung nach Anspruch 1, **dadurch gekennzeichnet, dass** die Befüllleitung (8) und die Entlüftungsleitung (7) einander konzentrisch umschließen.

3. Einrichtung nach Anspruch 1 oder 2, **dadurch gekennzeichnet, dass** die Befüllleitung (8) innerhalb der Entlüftungsleitung (7) angeordnet ist.

4. Einrichtung nach zumindest einem der vorhergehenden Ansprüche, **dadurch gekennzeichnet, dass** auf dem freien Ende des Anschlussstücks (10) ein einen Entlüftungskanal (13) aufweisender Stopfen (12) befestigt ist und dass der Entlüftungskanal (13) mit der Entlüftungsleitung (7) verbunden ist.

5. Einrichtung nach zumindest einem der vorhergehenden Ansprüche, **dadurch gekennzeichnet, dass** die Verbindung der Entlüftungsleitung (7) mit dem Entlüftungskanal (13) das Anschlussstück (10) und den sich an das Anschlussstück (10) anschließenden Bereich der Befüllleitung (8) konzentrisch umschließt.

6. Einrichtung nach zumindest einem der vorhergehenden Ansprüche, **dadurch gekennzeichnet, dass** der Stopfen (12) formschlüssig mit dem Flansch (5) verbunden ist.

7. Einrichtung nach zumindest einem der vorhergehenden Ansprüche, **dadurch gekennzeichnet, dass** das Anschlussstück (10) hervorstehende, in einem rohrförmigen Stutzen (9) des Flansches (5) geführte Ränder (11) hat.

8. Einrichtung nach zumindest einem der vorhergehenden Ansprüche, **dadurch gekennzeichnet, dass** die Ränder (11) als um das Anschlussstück (10) umlaufende Bunde mit axialen Ausnehmungen (14) ausgebildet sind.

9. Einrichtung nach zumindest einem der vorhergehenden Ansprüche, **dadurch gekennzeichnet, dass** der Stopfen (12) ein Dichtelement (18) zum Verschließen des Anschlussstücks (10) in einer in den Stutzen (9) eingeschobenen Stellung hat.

10. Einrichtung nach zumindest einem der vorhergehenden Ansprüche, **dadurch gekennzeichnet, dass** der Stutzen (9) zur Begrenzung der Verschiebbarkeit des Anschlussstücks (10) vorgesehene, sich an den Rändern (11) abstützende Anschläge (15, 16) hat.

11. Einrichtung nach zumindest einem der vorhergehenden Ansprüche, **dadurch gekennzeichnet, dass** zumindest einer der Anschläge (15) parallel zum Anschlussstück (10) angeordnete Stege (17) hat.

12. Einrichtung nach zumindest einem der vorhergehenden Ansprüche, **dadurch gekennzeichnet, dass** der an der Außenseite des Kraftstoffbehälters (1) anzuordnende Anschlag (16) Rasthaken oder eine Ω-förmige Feder aufweist.

13. Einrichtung nach zumindest einem der vorhergehenden Ansprüche, **dadurch gekennzeichnet, dass** zumindest einer der Anschläge (15) von einer Anschlaghülse (20) gebildet ist.

14. Einrichtung nach Anspruch 13, **dadurch gekennzeichnet, dass** die Anschlaghülse (20) einen nach innen gerichteten Kragen (21) besitzt, der einen Rand (11) umgreift.

15. Einrichtung nach Anspruch 13, **dadurch gekennzeichnet, dass** die Anschlaghülse (20) nach außen gerichtete Rasthaken (22) besitzt, die sich am Stutzen (9) abstützen.

## Claims

1. Device for filling and ventilating an auxiliary tank, which has a filling line which is led through a fuel tank, having a filling line and having a ventilation line, with the filling line (8) and the ventilation line (7) being formed as a structural unit and with a connecting piece (10) which is connected to the filling line (8) being held in a displaceable fashion on a flange (5) of the fuel tank (1).

2. Device according to Claim 1, **characterized in that** the filling line (8) and the ventilation line (7) concentrically surround one another.

3. Device according to Claim 1 or 2, **characterized in that** the filling line (8) is arranged within the ventilation line (7).

4. Device according to at least one of the preceding claims, **characterized in that** a plug (12) which has a ventilation duct (13) is fastened to the free end of a connecting piece (10) and **in that** the ventilation duct (13) is connected to the ventilation line (7).

5. Device according to at least one of the preceding claims, **characterized in that** the connection of the ventilation line (7) to the ventilation duct (13) concentrically surrounds the connecting piece (10) and that region of the filling line (8) which adjoins the connecting piece (10).

6. Device according to at least one of the preceding claims, **characterized in that** the plug (12) is connected to the flange (5) in a form-fitting manner.

7. Device according to at least one of the preceding claims, **characterized in that** the connecting piece (10) has projecting edges (11) which are guided in a tubular pipe (9) of the flange (5).

8. Device according to at least one of the preceding claims, **characterized in that** the edges (11) are embodied as collars, which encircle the connecting piece (10), with axial recesses (14).

9. Device according to at least one of the preceding claims, **characterized in that** the plug (12) has a sealing element (18) for closing off the connecting piece (10) when the latter is in a position in which it is pushed into the pipe (9).

10. Device according to at least one of the preceding claims, **characterized in that** the pipe (9) has stops (15, 16) which are provided for limiting the displaceability of the connecting piece (10) and which are supported on the edges (11).

11. Device according to at least one of the preceding claims, **characterized in that** at least one of the stops (15) has webs (17) which are arranged parallel to the connecting piece (10).

12. Device according to at least one of the preceding claims, **characterized in that** the stop (16) which is to be arranged on the outer side of the fuel tank (1) has latching hooks or an Ω-shaped spring.

13. Device according to at least one of the preceding claims, **characterized in that** at least one of the stops (15) is formed by a stop sleeve (20).

14. Device according to Claim 13, **characterized in that** the stop sleeve (20) has an inwardly-directed collar (21) which engages around an edge (11).

15. Device according to Claim 13, **characterized in that** the stop sleeve (20) has outwardly-directed latching hooks (22) which are supported on the pipe (9).

## Revendications

1. Dispositif permettant de remplir et de ventiler un réservoir supplémentaire doté d'une conduite de remplissage et d'une conduite de ventilation et dont la conduite de remplissage passe à travers un réservoir à carburant, la conduite de remplissage (8) et la conduite de ventilation (7) formant une unité constructive et un raccord (10) lié à la conduite de remplissage (8) étant maintenu en translation dans une flasque (5) du réservoir à carburant (1).

2. Dispositif selon la revendication 1, **caractérisé par le fait que** la conduite de remplissage (8) et la conduite de ventilation (7) sont concentriques l'une par rapport à l'autre.

3. Dispositif selon la revendication 1 ou 2, **caractérisé par le fait que** la conduite de remplissage (8) est placée à l'intérieur de la conduite de ventilation (7).

4. Dispositif selon au moins l'une des revendications précédentes, **caractérisé par le fait qu**'un bouchon (12) comportant un canal de ventilation (13) est fixé à l'extrémité libre du raccord (10) et que le canal de ventilation (13) est relié à la conduite de ventilation (7).

5. Dispositif selon au moins l'une des revendications précédentes, **caractérisé par le fait que** la liaison entre la conduite de ventilation (7) et le canal de ventilation (13) entoure concentriquement le raccord (10) et la partie de la conduite de remplissage (8) voisine du raccord (10) .

6. Dispositif selon au moins l'une des revendications précédentes, **caractérisé par le fait que** le bouchon (12) est lié par assemblage géométrique à la flasque (5).

7. Dispositif selon au moins l'une des revendications précédentes, **caractérisé par le fait que** le raccord (10) a des bords (11) faisant saillie qui sont introduits dans un manchon (9) en forme de tube de la flasque (5).

8. Dispositif selon au moins l'une des revendications précédentes, **caractérisé par le fait que** les bords (11) sont conçus sous la forme de bourrelets périmétriques autour du raccord (10) et ont des évidements (14) dans le sens axial.

9. Dispositif selon au moins l'une des revendications précédentes, **caractérisé par le fait que** le bouchon (12) a un élément d'étanchéité (18) destiné à obturer le raccord (10) dans une position enfoncée dans le manchon (9).

10. Dispositif selon au moins l'une des revendications précédentes, **caractérisé par le fait que** le manchon (9) a des butées (15, 16) qui s'appuient sur les bords (11) pour limiter la possibilité de translation du raccord (10).

11. Dispositif selon au moins l'une des revendications précédentes, **caractérisé par le fait que** au moins l'une des butées (15) a des barrettes (17) disposées parallèlement au raccord (10).

12. Dispositif selon au moins l'une des revendications précédentes, **caractérisé par le fait que** la butée (16) à mettre en place sur la face extérieure du réservoir à carburant (1) comporte des crochets d'arrêts ou un ressort en forme de Ω.

13. Dispositif selon au moins l'une des revendications précédentes, **caractérisé par le fait que** au moins l'une des butées (15) est formée par une douille de butée (20) .

14. Dispositif selon la revendication 13, **caractérisé par le fait que** la douille de butée (20) possède un col (21) qui est orienté vers l'intérieur et qui entoure un bord (11).

15. Dispositif selon la revendication 13, **caractérisé par le fait que** la douille de butée (20) possède des crochets d'arrêt (22) qui sont dirigés vers l'extérieur et qui s'appuient sur le manchon (9).
